# EUROPÄISCHE PATENTSCHRIFT

(11) **EP 2 352 659 B1**
(45) Veröffentlichungstag und Bekanntmachung des Hinweises auf die Patenterteilung: **05.04.2017**
(21) Anmeldenummer: 09737372.4
(22) Anmeldetag: 20.10.2009
(51) Int. Cl.: B60K 35/00, B60K 37/06

(54) **KRAFTFAHRZEUG MIT EINER BEDIENEINRICHTUNG UND EINER ANZEIGEEINRICHTUNG ZUR ANZEIGE VON FAHRZEUGBEZOGENEN INFORMATIONEN**
MOTOR VEHICLE HAVING AN OPERATOR CONTROL DEVICE AND A DISPLAY DEVICE FOR DISPLAYING VEHICLE-RELATED INFORMATION
VÉHICULE AUTOMOBILE AVEC ÉQUIPEMENT DE COMMANDE ET D'AFFICHAGE POUR L'AFFICHAGE D'INFORMATIONS CONCERNANT LE VÉHICULE

(30) Priorität: 13.11.2008 DE 102008056973
(43) Veröffentlichungstag der Anmeldung: 10.08.2011
(73) Patentinhaber: Bayerische Motoren Werke Aktiengesellschaft, 80809 München (DE)
(72) Erfinder: KNOLL, Christian, 80538 München (DE); ZOBL, Martin, 86916 Kaufering (DE); SCHUMANN, Josef, 80995 München (DE); ECKSTEIN, Lutz, 82319 Starnberg (DE)
(86) Internationale Anmeldenummer: PCT/EP2009/007494
(87) Internationale Veröffentlichungsnummer: WO 2010/054737

(56) Entgegenhaltungen:
- EP-A1- 2 181 880
- EP-A2- 1 300 278
- WO-A1-2006/114111
- WO-A2-2006/108617
- DE-A1-102007 014 530

## Beschreibung

Die Erfindung betrifft ein Kraftfahrzeug mit einer Vielzahl von elektronischen Erfassungseinrichtungen.

Aktuelle Kraftfahrzeuge verfügen zunehmend über eine separat von einer Anzeigeeinrichtung gebildete Bedieneinheit im Bereich der Mittelkonsole. Eine solche Bedieneinheit ist beispielsweise aus der EP 0893750 B1 bekannt. Die Bedieneinheit verfügt dabei über ein bidirektional um seine Symmetrieachse drehbares Schaltglied, das zudem axial bewegbar (drückbar) und schwenkbar gelagert ist. Damit können durch ein Drehen, Drücken und/oder Schwenken des Schaltgliedes beispielsweise Menüpunkte auf einer Anzeigeeinrichtung markiert und ausgewählt werden oder Parameter eingestellt werden.

Aus der WO2006/108617 A2 ist ein Kraftfahrzeug gemäß den Oberbegriffen der Ansprüche 1-4 bekannt.

Aus der EP2181880 A1 ist es bekannt, Signale verschiedener Instrumente über ein Gateway auf ein Display zu leiten.

Ebenfalls ist es bekannt, den Zoom-Faktor, insbesondere den Darstellungsmaßstab, einer Straßenkartendarstellung eines Kraftfahrzeugnavigationssystems durch ein Drehen einer solchen Bedieneinheit einzustellen. Der Begriff "Zoom" umfasst im Rahmen der Erfindung auch den Begriff "Darstellungsmaßstabsänderung".

Außerdem sind elektronische Erfassungseinrichtungen für Kraftfahrzeuge bekannt. Diese umfassen beispielsweise eine Sensoreinrichtung und eine Steuer- oder Verarbeitungseinrichtung, und sind zur Beobachtung, Überwachung oder Kontrolle von Fahrzeugkomponenten oder Bereichen innerhalb oder außerhalb des Kraftfahrzeuges vorgesehen.

Beispiele hierfür sind Fahrerassistenzsysteme, Check-Control-Systeme, Nahfelderfassungssysteme, etc. Falls durch ein solches System ein Fehler oder ein kritischer Zustand erkannt wird, wird beispielsweise automatisch eine Kontrollleuchte aktiviert oder ein anderes Überwachungssignal ausgegeben.

Ergänzend oder alternativ dazu ist es bekannt, einem Nutzer die Möglichkeit zu geben, mittels eines Bedienelementes, beispielsweise einer Taste, auf durch eine Erfassungseinrichtung bereitgestellte Informationen zuzugreifen. Ein solcher Zugriff auf Fahrerassistenzinformationen, Check-Control-Informationen und/oder Umgebungsinformationen, kann auch durch die Auswahl eines Menüpunktes mittels einer oben genannten Bedieneinheit erfolgen.

Insbesondere der manuelle Zugriff auf durch die Erfassungseinrichtungen bereitgestellte Fahrzeug-Informationen ist dabei in der Regel kompliziert und nicht intuitiv gestaltet. Darüber hinaus erfolgt bislang der Zugriff auf verschiedene Fahrzeuginformationen, wie beispielsweise Informationen des Navigationssystems, Informationen der Fahrerassistenz und Check-Control-Informationen, auf uneinheitliche Weise, insbesondere über unterschiedliche Bedienelemente und Anzeigen.

Der Erfindung liegt nun die Aufgabe zugrunde, ein verbessertes Kraftfahrzeug anzugeben.

Diese Aufgabe wird durch die Merkmale der unabhängigen Ansprüche gelöst. Vorteilhafte Weiterbildungen der Erfindung sind den abhängigen Ansprüchen zu entnehmen.

Ein bevorzugtes Kraftfahrzeug enthält eine Vielzahl von elektronischen Erfassungseinrichtungen zum Erfassen und Bereitstellen von fahrzeugbezogenen Informationen, wobei sich die fahrzeugbezogenen Informationen auf verschiedene Bereiche oder Komponenten außerhalb oder innerhalb des Kraftfahrzeuges beziehen.

Beispiele für Erfassungseinrichtungen sind:
- Nahfelderfassungssysteme zum Bereitstellen von Informationen über die Nahumgebung (beispielsweise eine Umgebung, die innerhalb eines Kreises um das Kraftfahrzeugzentrum mit einem Radius von 20 Meter liegt) des Kraftfahrzeuges. Es werden als fahrzeugbezogene Informationen beispielsweise Informationen über Einparkhindernisse oder Aussteigehindernisse ausgegeben.
- Reifenkontrollsysteme zum Bereitstellen von Informationen über die Fahrzeugreifen. Es werden als fahrzeugbezogene Informationen beispielsweise Informationen über den Reifen-Luftdruck oder die Reifen-Restlaufstrecke bereitgestellt.
- Betriebsstoffkontrollsysteme zum Bereitstellen von Informationen über den Füllstand von Betriebstoffbehältern. Es werden als fahrzeugbezogene Informationen beispielsweise Informationen über den Füllstand des Waschflüssigkeitsbehälters, des Motorölbehälters, des Bremsflüssigkeitsbehälters etc. bereitgestellt.
- Verschleißgradkontrollsysteme zum Bereitstellen von Informationen über den Verschleiß grad von Fahrzeugkomponenten. Es werden als fahrzeugbezogene Informationen beispielsweise Informationen über den Verschleißgrad von Fahrzeugbremskomponenten, etc. bereitgestellt.

Auf einer Anzeigeeinrichtung können die fahrzeugbezogenen Informationen angezeigt werden. Durch eine Bedieneinrichtung kann eine Bedienaktion erfasst werden. Eine Steuereinrichtung ist derart eingerichtet und mit den Erfassungseinrichtungen, der Anzeigeeinrichtung und der Bedieneinrichtung gekoppelt, dass in einem ersten Anzeigebetriebszustand erste fahrzeugbezogene Informationen und ein erstes, das Kraftfahrzeug repräsentierendes Grafikobjekt (Kraftfahrzeug-Grafikobjekt; beispielsweise eine vereinfachte Draufsicht-Darstellung eines Kraftfahrzeuges) dargestellt werden, dass in einem zweiten Anzeigebetriebszustand zweite fahrzeugbezogene Informationen und ein zweites, das Kraftfahrzeug repräsentierendes Grafikobjekt dargestellt werden, dass das erste das Kraftfahrzeug repräsentierende Grafikobjekt, insbesondere hinsichtlich der Darstellungsgröße, größer ist als das zweite und dass durch eine insbesondere vorgegebene Bedienaktion ein Umschalten zwischen erstem und zweitem Anzeigebetriebszustand bewirkt wird.

Verschiedene Erfassungseinrichtungen sind dadurch mit Kraftfahrzeug-Grafikobjekten verschiedener Größe gekoppelt. Dies ermöglicht eine geeignetere auf das Kraftfahrzeug-Grafikobjekt bezogene Anzeige von fahrzeugbezogenen Informationen. Zudem wird dadurch ein "Zoomen" des Grafikobjekts verbunden mit einem intuitiven Umschalten zwischen Erfassungseinrichtungen und den damit verbundenen fahrzeugbezogenen Informationen. Die anhand der verschiedenen Größen der Kraftfahrzeug-Grafikobjekte für einen Nutzer erkennbare Zoomwirkung seiner Bedienaktion wird damit gekoppelt mit einem "Zoomen" durch fahrzeugbezogene Informationen. Aus einem Umschalten zwischen Erfassungseinrichtungen oder fahrzeugbezogenen Informationen wird so ein intuitives "Zoomen" durch verschiedene Erfassungseinrichtungen oder fahrzeugbezogene Informationen. Der gezielte manuelle Zugriff auf bestimmte fahrzeugbezogene Informationen aus einer Vielzahl fahrzeugbezogener Informationen wird dadurch einfach, schnell, zuverlässig und intuitiv ermöglicht.

Vorzugsweise beziehen sich die zweiten fahrzeugbezogenen Informationen auf einen Bereich oder eine Komponente außerhalb oder innerhalb des Kraftfahrzeuges, die eine größere Entfernung zum Zentrum des Kraftfahrzeuges aufweisen als der Bereich oder die Komponente, auf welche sich die ersten fahrzeugbezogenen Informationen beziehen. Dieser Zusammenhang muss nicht lückenlos oder ausnahmslos umgesetzt sein.

Dadurch werden entferntere Komponenten oder Bereiche mit dem kleineren, das Kraftfahrzeug repräsentierenden Grafikobjekt gekoppelt und umgekehrt. Anhand eines kleiner werdenden Grafikobjektes wird einem Nutzer vermittelt, dass nun fahrzeugbezogene Informationen angezeigt werden, die sich auf entferntere Komponenten oder Bereiche beziehen. Anhand eines größer werdenden Grafikobjektes wird einem Nutzer vermittelt, dass nun fahrzeugbezogene Informationen angezeigt werden, die sich auf näher am Fahrzeugzentrum angeordnete Komponenten oder Bereiche beziehen.

Vorzugsweise wird durch die vorgegebene Bedienaktion in einem weiteren, insbesondere einem dritten, Anzeigebetriebszustand, beispielsweise einem Zoom-Betriebszustand, Navigations-Betriebszustand oder einem Straßenkartenanzeige-Zustand, der Darstellungsmaßstab einer Straßenkartendarstellung geändert. Die Straßenkartendarstellung kann mittels eines an sich bekannten Navigationssystems bereit gestellt werden.

Es wird also in diesem weiteren Anzeigebetriebszustand durch eine an sich bekannte Bedienaktion, insbesondere eine Zoom-Bedienaktion, eine an sich bekannte Zoom-Wirkung, die sich auf eine Straßenkartendarstellung bezieht, bewirkt. Durch dieselbe Bedienaktion, insbesondere die Zoom-Bedienaktion, wird - wie oben geschildert - zwischen verschiedenen Erfassungseinrichtungen oder fahrzeugbezogenen Informationen umgeschaltet. Dadurch wird die Übertragung des Zoom-Gedankens auf das Umschalten zwischen verschiedenen Erfassungseinrichtungen oder fahrzeugbezogenen Informationen noch verstärkt. Dadurch wird der gezielte manuelle Zugriff auf gewünschte fahrzeugbezogene Informationen weiter vereinfacht.

Vorzugsweise wird im zweiten Anzeigebetriebszustand durch die Bedienaktion in einen Zoom-Betriebszustand umgeschaltet, in dem durch die Anzeigeeinrichtung eine Straßenkartendarstellung angezeigt wird, und in dem durch eine weitere Bedienaktion der Darstellungsmaßstab der Straßenkartendarstellung geändert wird. Im ersten und zweiten Anzeigebetriebszustand wird vorzugsweise keine Straßenkartendarstellung durch die Anzeigeeinrichtung angezeigt.

Dadurch wird ermöglicht, dass durch aufeinanderfolgende Bedienaktionen, insbesondere Zoom-Bedienaktionen von einem ersten Anzeigebetriebszustand (Anzeige von fahrzeugbezogenen Informationen, die sich auf eine Komponente oder einen Bereich nahe am Fahrzeugzentrum beziehen; große Darstellung des Kraftfahrzeug-Grafikobjektes) zunächst in einen zweiten Anzeigebetriebszustand (Anzeige von fahrzeugbezogenen Informationen, die sich auf eine Komponente oder einen Bereich beziehen, die entfernter vom Fahrzeugzentrum angeordnet sind als die Komponente oder der Bereich des ersten Anzeigebetriebszustand; kleinere Darstellung des Kraftfahrzeug-Grafikobjektes) umgeschaltet wird, und dann in einen dritten Anzeigebetriebszustand, insbesondere Zoom-Betriebszustand umgeschaltet wird, in dem durch die Anzeigeeinrichtung eine Straßenkartendarstellung angezeigt wird, und in dem durch eine weitere Bedienaktion, insbesondere Zoom-Bedienaktion, der Darstellungsmaßstab der Straßenkartendarstellung geändert wird. Vorzugsweise wird auch im dritten Betriebszustand ein Kraftfahrzeug-Grafikobjekt dargestellt, das vorteilhafterweise, insbesondere hinsichtlich der Darstellungsgröße, noch kleiner ist als das dem zweiten Anzeigebetriebszustand zugeordnete Kraftfahrzeug-Grafikobjekt.

Dadurch wird das von einer Straßenkartendarstellung bekannte Zoom-Konzept übertragen und erweitert auf eine Kraftfahrzeug-Grafikobjekt-Darstellung, wobei das Zoomen durch die Kraftfahrzeug-Grafikobjekt-Darstellung verbunden ist mit der Darstellung verschiedener fahrzeugbezogener Informationen. Der Zoom-Gedanke ist dabei auch auf die Darstellung verschiedener fahrzeugbezogener Informationen übertragen, da mit der Vergrößerung der Darstellung des Kraftfahrzeug-Grafikobjektes nach und nach verschiedene fahrzeugbezogene Informationen angezeigt werden, die sich auf verschiedene Komponenten oder Bereiche beziehen. Je größer die Darstellung des Kraftfahrzeug-Grafikobjektes, desto näher liegen die Komponenten oder Bereich, die durch die fahrzeugbezogenen Informationen beschrieben werden, am Kraftfahrzeugzentrum.

Vorzugsweise sind das erste und das zweite (und gegebenenfalls das dritte) das Kraftfahrzeug repräsentierende Grafikobjekt hinsichtlich der Gestalt und/oder des Umrisses und/oder der Darstellungsposition auf der Anzeigeeinrichtung im Wesentlichen identisch. Dadurch wird der Zoom-Gedanke einem Nutzer noch besser vermittelt.

Vorzugsweise werden Bereiche oder Komponenten, auf welche sich die dargestellten fahrzeugbezogenen Informationen beziehen, derart auf der Anzeigeeinrichtung angezeigt, dass entsprechende Komponenten-Grafikobjekte oder Bereichs-Grafikobjekte auf der Anzeigeeinrichtung markiert, insbesondere hervorgehoben oder detaillierter dargestellt, werden. Die Lage der Komponenten-Grafikobjekte oder der Bereichs-Grafikobjekte relativ zum Kraftfahrzeug-Grafikobjekt entspricht der Lage der Komponenten oder Bereiche relativ zum Zentrum des Kraftfahrzeuges.

Eine oder die Bedienaktionen, insbesondere die Zoom-Bedienaktion, umfassen vorzugsweise eine Drehung eines Drehelementes um einen vorgegebenen Drehwinkel, insbesondere in eine vorgegebene Drehrichtung.

Im Rahmen der Erfindung liegt auch ein Kraftfahrzeug mit einer Vielzahl von elektronischen Erfassungseinrichtungen zum Erfassen und Bereitstellen von fahrzeugbezogenen Informationen, wobei sich die fahrzeugbezogenen Informationen auf verschiedene Bereiche oder Komponenten außerhalb oder innerhalb des Kraftfahrzeuges beziehen, mit einer Anzeigeeinrichtung zur Anzeige von fahrzeugbezogenen Informationen und eines das Kraftfahrzeug repräsentierenden Grafikobjekts, mit einer Bedieneinrichtung zur Erfassung einer Bedienaktion und mit einer Steuereinrichtung, die derart eingerichtet und mit den Erfassungseinrichtungen, der Anzeigeeinrichtung und der Bedieneinrichtung gekoppelt ist, dass durch aufeinanderfolgende identische Bedienaktionen durch verschiedene fahrzeugbezogene Informationen geblättert wird (werden nacheinander auf der Anzeigeeinrichtung angezeigt), wobei das Blättern durch verschiedene fahrzeugbezogene Informationen mit einer Änderung des Darstellungsmaßstabes eines auf der Anzeigeeinrichtung dargestellten, das Kraftfahrzeug repräsentierenden Grafikobjekts gekoppelt ist. Vorzugsweise liegt es auch im Rahmen der Erfindung, wenn die erfindungsgemäße Kopplung von Blättern und Änderung des Darstellungsmaßstabes nur teilweise, beispielsweise bei einem Teil der angezeigten dargestellten fahrzeugbezogenen Informationen umgesetzt ist.

Vorzugsweise ist das Blättern durch verschiedene fahrzeugbezogene Informationen mit einer aufeinander folgenden Markierung von Komponenten-Grafikobjekten oder Bereichs-Grafikobjekten auf der Anzeigeeinrichtung gekoppelt, wobei die Komponenten-Grafikobjekte oder Bereichs-Grafikobjekte den Komponenten oder Bereichen entsprechen, auf welche sich die angezeigten fahrzeugbezogenen Informationen beziehen.

Es ist eine Weiterbildung der Erfindung, dass die Lage der Komponenten-Grafikobjekte oder der Bereichs-Grafikobjekte relativ zum das Kraftfahrzeug repräsentierenden Grafikobjekt der Lage der Komponenten oder Bereiche relativ zum Zentrum des Kraftfahrzeuges entspricht.

Im Folgenden wird die Erfindung anhand von Beispielen unter Bezugnahme auf die folgenden Figuren näher erläutert:

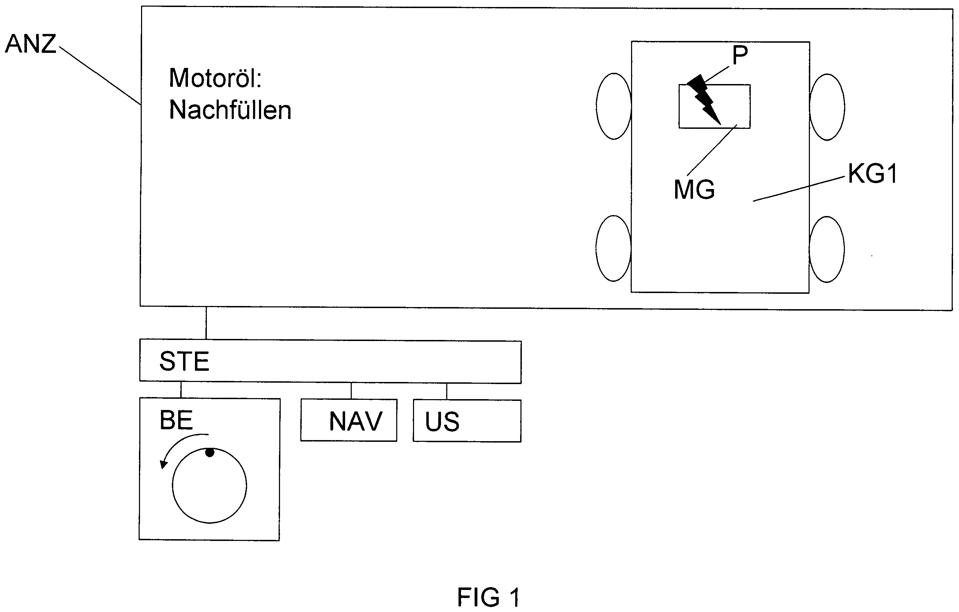

- Figuren 1 bis 5: zeigen jeweils ein vereinfachtes Blockschaltbild eines Kraftfahrzeugsystems in verschiedenen Anzeigebetriebszuständen.

Es wird von einem an sich bekannten Kraftfahrzeug ausgegangen. Die zum Verständnis der Erfindung erforderlichen Bestandteile des Kraftfahrzeuges sind in Figur 1 dargestellt und umfassen:
- eine Vielzahl von elektronischen Erfassungseinrichtungen US zum Erfassen und Bereitstellen von fahrzeugbezogenen Informationen, wobei sich die fahrzeugbezogenen Informationen auf verschiedene Bereiche oder Komponenten außerhalb oder innerhalb des Kraftfahrzeuges beziehen;
- eine Anzeigeeinrichtung ANZ, wie beispielsweise ein Display oder einen Displayabschnitt, zur Anzeige von fahrzeugbezogenen Informationen;
- ein Navigationssystem NAV zum Bereitstellen einer Straßenkartendarstellung;
- eine Bedieneinrichtung BE, beispielsweise in Form eines Dreh-DruckElementes, zur Erfassung einer Bedienaktion und
- ein oder mehrere Steuergeräte STE, die mit den Erfassungseinrichtungen US, der Anzeigeeinrichtung ANZ, dem Navigationssystem NAV und der Bedieneinrichtung BE gekoppelt sind.

Insbesondere die Steuereinrichtung STE ist nun gemäß der Erfindung derart eingerichtet, dass in einem ersten Anzeigebetriebszustand erste fahrzeugbezogene Informationen und ein erstes, das Kraftfahrzeug repräsentierendes Grafikobjekt dargestellt werden, dass in einem zweiten Anzeigebetriebszustand zweite fahrzeugbezogene Informationen und ein zweites, das Kraftfahrzeug repräsentierendes Grafikobjekt dargestellt werden, dass das erste das Kraftfahrzeug repräsentierende Grafikobjekt größer dargestellt ist als das zweite und dass durch eine Bedienaktion ein Umschalten zwischen erstem und zweitem Anzeigebetriebszustand bewirkt wird.

In Figur 1 befindet sich das System - umfassend die genannten Bestandteile - im ersten Anzeigebetriebszustand.

Das Kraftfahrzeuggrafikobjekt KG1 ist relativ groß dargestellt. Als erste fahrzeugbezogene Informationen ist der Hinweis "Motoröl: Nachfüllen" angezeigt.

Die Komponente, auf welche sich die dargestellten fahrzeugbezogenen Informationen beziehen, ist in diesem Beispiel der Motorölbehälter. Das entsprechende Komponenten-Grafikobjekt, hier Motorölbehälter-Grafikobjekt MG, ist durch den Pfeil P markiert dargestellt und wird dadurch hervorgehoben angezeigt.

Die Lage des Motorölbehälter-Grafikobjekts MG relativ zum das Kraftfahrzeug repräsentierenden Grafikobjekt KG1 entspricht der Lage des Motorölbehälters relativ zum Zentrum des Kraftfahrzeuges.

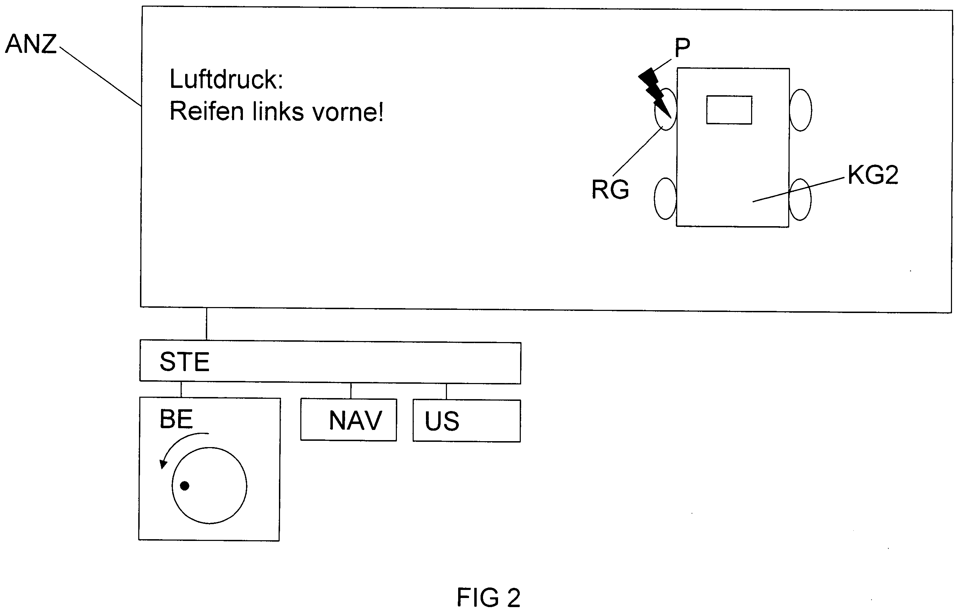

Wird nun das Drehelement BE in dem ersten Anzeigebetriebszustand - wie in Figur 2 ersichtlich - um einen Drehwinkel von 90 Grad entgegen dem Uhrzeigersinn gedreht, so wird durch diese Bedienaktion von dem ersten Anzeigebetriebszustand in den zweiten Anzeigebetriebszustand umgeschaltet.

Das zweite Kraftfahrzeuggrafikobjekt KG2 ist nun eine Stufe kleiner dargestellt. Als zweite fahrzeugbezogene Informationen ist der Hinweis "Luftdruck: Reifen links vorne!" angezeigt.

Die Komponente, auf welche sich die dargestellten fahrzeugbezogenen Informationen beziehen, ist in diesem Beispiel der Reifen links vorne. Das entsprechende Komponenten-Grafikobjekt, hier das Reifen-Grafikobjekt RG links oben, ist durch den Pfeil P markiert dargestellt und wird dadurch hervorgehoben angezeigt.

Die Lage des Reifen-Grafikobjektes RG relativ zum das Kraftfahrzeug repräsentierenden Grafikobjekt KG2 entspricht der Lage des Reifens links vorne relativ zum Zentrum des Kraftfahrzeuges.

Die zweiten fahrzeugbezogenen Informationen (Reifendruck) beziehen sich auf eine Komponente (Reifen), der eine größere Entfernung zum Zentrum des Kraftfahrzeuges aufweist als die Komponente (Motorölbehälter), auf welche sich die ersten fahrzeugbezogenen Informationen (Motorölfüllstand) beziehen.

Das erste und das zweite das Kraftfahrzeug repräsentierende Grafikobjekt KG1, KG2 sind hinsichtlich der Gestalt, des Umrisses und der Darstellungsposition auf der Anzeigeeinrichtung im Wesentlichen identisch.

Die Erfindung wird nun anhand eines weiteren Beispiels erläutert. Dazu wird davon ausgegangen, dass der bislang "zweite Anzeigebetriebszustand" ein "erster Anzeigebetriebszustand" ist.

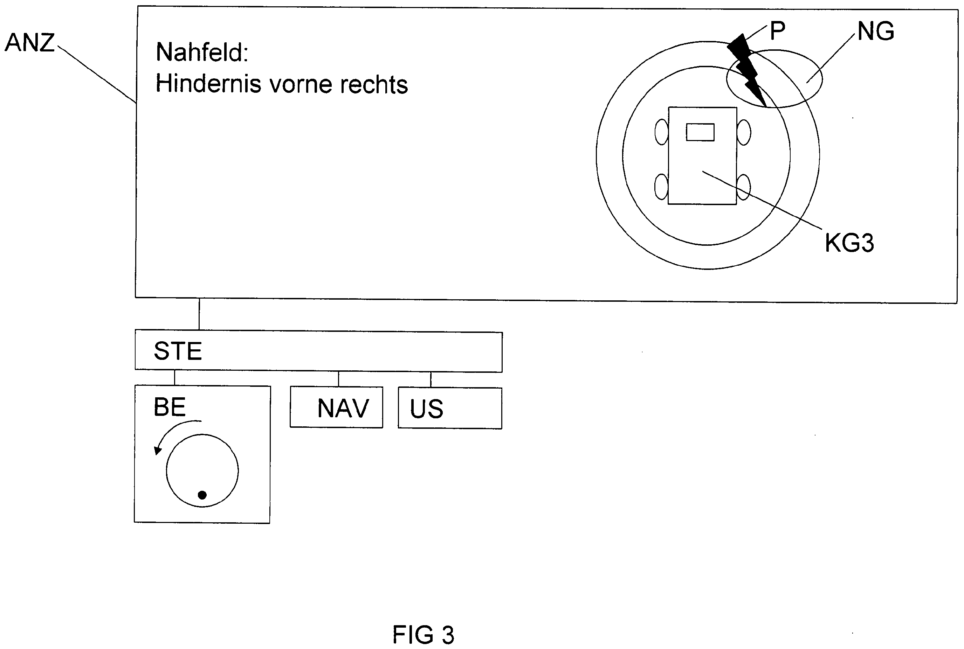

Wird nun in diesem neuen ersten Anzeigebetriebszustand das Drehelement BE - wie in Figur 3 ersichtlich - um einen Drehwinkel von 90 Grad entgegen dem Uhrzeigersinn gedreht, so wird durch diese Bedienaktion von dem neuen ersten Anzeigebetriebszustand auf einen neuen zweiten Anzeigebetriebszustand umgeschaltet.

Das zweite Kraftfahrzeuggrafikobjekt KG3 ist nun noch eine Stufe kleiner dargestellt. Als zweite fahrzeugbezogene Informationen ist der Hinweis "Nahfeld: Hindernis vorne rechts" angezeigt.

Der Bereich, auf welchen sich die dargestellten fahrzeugbezogenen Informationen beziehen, ist in diesem Beispiel der Nahfeldbereich vorne rechts. Das entsprechende Bereichs-Grafikobjekt, hier das Nahfeld-Grafikobjekt NG rechts oben, ist durch den Pfeil P markiert dargestellt und wird dadurch hervorgehoben angezeigt.

Die Lage des Nahfeld-Grafikobjektes NG relativ zum das Kraftfahrzeug repräsentierenden Grafikobjekt KG3 entspricht der Lage des betroffenen Nahfeldes relativ zum Zentrum des Kraftfahrzeuges.

Die zweiten fahrzeugbezogenen Informationen (Hindernis im Nahfeld) beziehen sich auf einen Bereich (Nahfeld), der eine größere Entfernung zum Zentrum des Kraftfahrzeuges aufweist als die Komponente (Reifen), auf welche sich die ersten fahrzeugbezogenen Informationen (Reifendruck) beziehen.

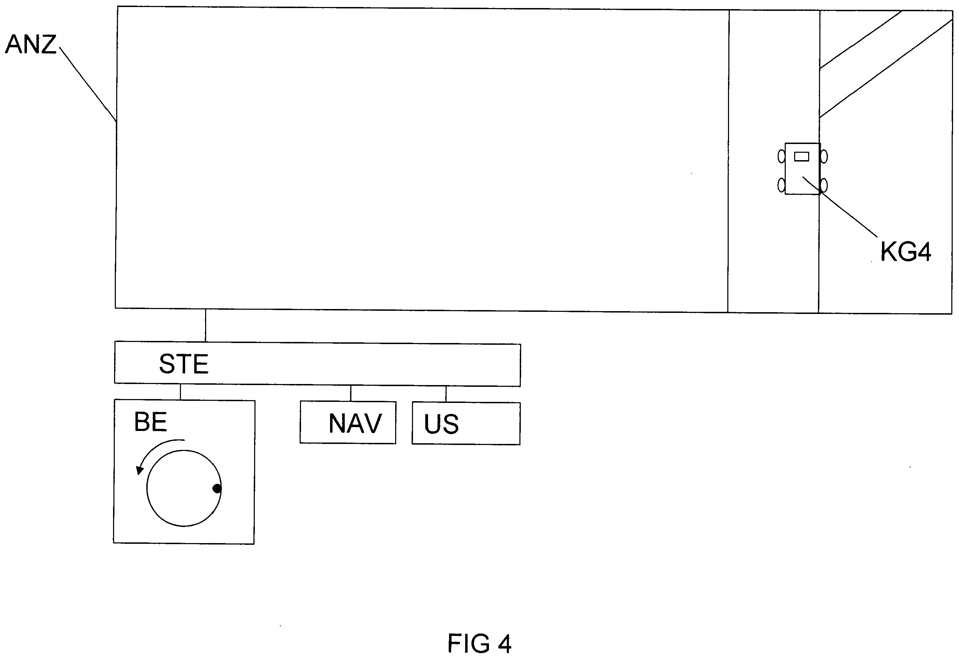

Wird nun in einem weiteren oder dem zweiten Anzeigebetriebszustand das Drehelement BE - wie in Figur 4 ersichtlich - um einen Drehwinkel von 90 Grad entgegen dem Uhrzeigersinn gedreht, so wird durch diese Bedienaktion von dem weiteren oder zweiten Anzeigebetriebszustand auf einen weiteren Betriebszustand, einen so genannten Zoombetriebszustand umgeschaltet, in dem durch die Anzeigeeinrichtung eine Straßenkartendarstellung angezeigt wird.

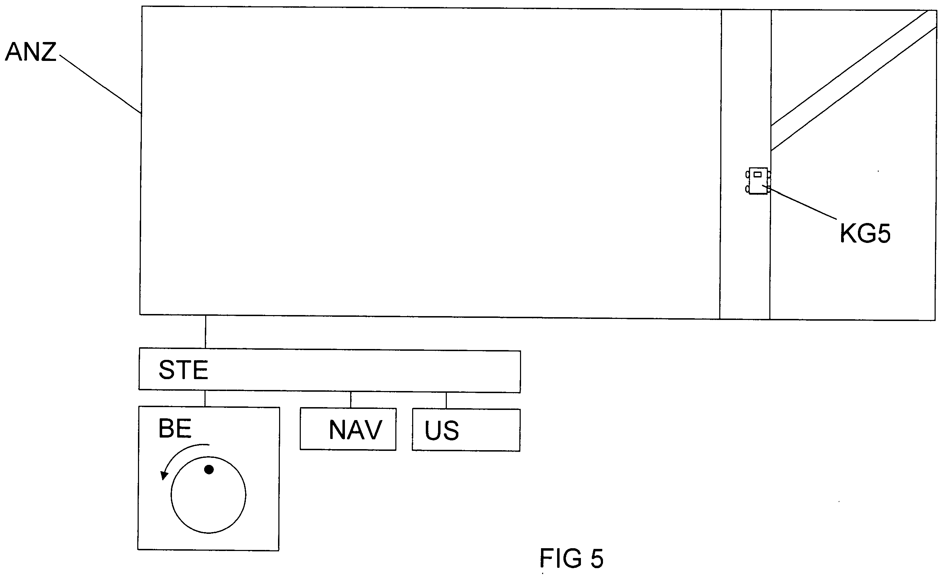

Im Zoombetriebszustand wird durch eine weitere Drehung des Drehelementes BE um einen Drehwinkel von 90 Grad entgegen dem Uhrzeigersinn (Zoom-Bedienaktion) - wie in Figur 5 ersichtlich - der Darstellungsmaßstab der Straßenkartendarstellung geändert.

Im Zoombetriebszustand ist durch weitere vorgegebene Zoom-Bedienaktionen der Zoom-Faktor für die Anzeige der Straßenkarteninformationen, insbesondere zwischen zwei Grenzwerten, einstellbar. In zumindest einer vorgegebenen Bediensituation oder Zoom-Situation, insbesondere bei der Einstellung des Zoomfaktors auf einen Grenzwert, wird durch eine weitere Zoom-Bedienaktion (Drehen des Drehelementes um 90 Grad im Uhrzeigersinn vom Zoombetriebszustand wieder zurück in den weiteren oder zweiten Anzeigebetriebszustand geschaltet.

Die Straßenkartendarstellung im Zoombetriebszustand erfolgt in den Figuren 4 und 5 entsprechend verschiedener Darstellungsmaßstäbe bzw. Zoomfaktoren. In Figur 4 ist die Straßenkartendarstellung und das entsprechende Kraftfahrzeug-Grafikobjekt KG4 größer dargestellt als die Straßenkartendarstellung und das entsprechende Kraftfahrzeug-Grafikobjekt KG5 in Figur 5.

Ausgehend von dem anhand von Figur 1 erläuterten ersten Anzeigebetriebszustand wird also durch aufeinander folgende Zoom-Bedienaktionen (Drehen des Drehelementes um 90 Grad entgegen dem Uhrzeigersinn) vom Fahrzeug-Zentrum "weg gezoomed", beginnend mit der Anzeige des Motor-ölstandes bis hin zu einer extrem verkleinerten Darstellung einer Straßenkarte. Dieses "Zoomen" wird dem Nutzer durch die ständig sich verkleinernde Darstellung eines Kraftfahrzeug-Grafikobjektes vermittelt.

Durch aufeinanderfolgende identische Bedienaktionen wird damit durch verschiedene fahrzeugbezogene Informationen geblättert, wobei das Blättern durch verschiedene fahrzeugbezogene Informationen mit einer Änderung des Darstellungsmaßstabes eines auf der Anzeigeeinrichtung dargestellten, das Kraftfahrzeug repräsentierenden Grafikobjekts gekoppelt ist.

Ausgehend von dem anhand von Figur 5 beschriebenen Anzeigebetriebszustand kann durch aufeinander folgende Drehungen des Drehelementes BE um 90 Grad im Uhrzeigersinn nach und nach wieder in den Anzeigebetriebszustand gemäß Figur 4, den Anzeigebetriebszustand gemäß Figur 3, den Anzeigebetriebszustand gemäß Figur 2 und den Anzeigebetriebszustand gemäß Figur 1 umgeschaltet werden.

Wie aufwändige Simulationen ergaben, wird durch die Erfindung ein intuitives, zuverlässiges, rasches, einfaches und übersichtliches Navigieren durch verschiedene fahrzeugbezogene Informationen ermöglicht.

## Patentansprüche

1. Kraftfahrzeug
- mit einer Vielzahl von elektronischen Erfassungseinrichtungen zum Erfassen und Bereitstellen von fahrzeugbezogenen Informationen, wobei sich die fahrzeugbezogenen Informationen auf verschiedene Bereiche oder Komponenten außerhalb oder innerhalb des Kraftfahrzeuges beziehen,
- mit einer Anzeigeeinrichtung (ANZ) zur Anzeige von fahrzeugbezogenen Informationen,
- mit einer Bedieneinrichtung (BE) zur Erfassung einer Bedienaktion und
- mit einer Steuereinrichtung (STE) die derart eingerichtet und mit den Erfassungseinrichtungen, der Anzeigeeinrichtung (ANZ) und der Bedieneinrichtung (BE) gekoppelt ist,
- dass in einem ersten Anzeigebetriebszustand erste fahrzeugbezogene Informationen und ein erstes, das Kraftfahrzeug repräsentierendes Grafikobjekt dargestellt werden,
- dass in einem zweiten Anzeigebetriebszustand zweite fahrzeugbezogene Informationen und ein zweites, das Kraftfahrzeug repräsentierendes Grafikobjekt dargestellt werden, und
- dass durch eine Bedienaktion ein Umschalten zwischen erstem und zweitem Anzeigebetriebszustand bewirkt wird, **dadurch gekennzeichnet, dass** das erste das Kraftfahrzeug repräsentierende Grafikobjekt größer als das zweite ist, und dass durch die Bedienaktion in einem weiteren Betriebszustand der Darstellungsmaßstab einer Straßenkartendarstellung geändert wird.

2. Kraftfahrzeug
- mit einer Vielzahl von elektronischen Erfassungseinrichtungen zum Erfassen und Bereitstellen von fahrzeugbezogenen Informationen, wobei sich die fahrzeugbezogenen Informationen auf verschiedene Bereiche oder Komponenten außerhalb oder innerhalb des Kraftfahrzeuges beziehen,
- mit einer Anzeigeeinrichtung (ANZ) zur Anzeige von fahrzeugbezogenen Informationen,
- mit einer Bedieneinrichtung (BE) zur Erfassung einer Bedienaktion und
- mit einer Steuereinrichtung (STE) die derart eingerichtet und mit den Erfassungseinrichtungen, der Anzeigeeinrichtung (ANZ) und der Bedieneinrichtung (BE) gekoppelt ist,
- dass in einem ersten Anzeigebetriebszustand erste fahrzeugbezogene Informationen und ein erstes, das Kraftfahrzeug repräsentierendes Grafikobjekt dargestellt werden,
- dass in einem zweiten Anzeigebetriebszustand zweite fahrzeugbezogene Informationen und ein zweites, das Kraftfahrzeug repräsentierendes Grafikobjekt dargestellt werden,
- dass durch eine Bedienaktion ein Umschalten zwischen erstem und zweitem Anzeigebetriebszustand bewirkt wird, und
- bei dem die Bereiche oder Komponenten, auf welche sich die dargestellten fahrzeugbezogenen Informationen beziehen, dadurch auf der Anzeigeeinrichtung angezeigt werden, dass entsprechende Komponenten-Grafikobjekte oder Bereichs-Grafikobjekte auf der Anzeigeeinrichtung markiert werden, wobei die Lage der Komponenten-Grafikobjekte oder der Bereichs-Grafikobjekte relativ zum das Kraftfahrzeug repräsentierenden Grafikobjekt der Lage der Komponenten oder Bereiche relativ zum Zentrum des Kraftfahrzeuges entspricht, **dadurch gekennzeichnet, dass** das erste das Kraftfahrzeug repräsentierende Grafikobjekt größer als das zweite ist.

3. Kraftfahrzeug
- mit einer Vielzahl von elektronischen Erfassungseinrichtungen zum Erfassen und Bereitstellen von fahrzeugbezogenen Informationen, wobei sich die fahrzeugbezogenen Informationen auf verschiedene Bereiche oder Komponenten außerhalb oder innerhalb des Kraftfahrzeuges beziehen,
- mit einer Anzeigeeinrichtung (ANZ) zur Anzeige von fahrzeugbezogenen Informationen,
- mit einer Bedieneinrichtung (BE) zur Erfassung einer Bedienaktion und
- mit einer Steuereinrichtung (STE) die derart eingerichtet und mit den Erfassungseinrichtungen, der Anzeigeeinrichtung (ANZ) und der Bedieneinrichtung (BE) gekoppelt ist,
- dass in einem ersten Anzeigebetriebszustand erste fahrzeugbezogene Informationen und ein erstes, das Kraftfahrzeug repräsentierendes Grafikobjekt dargestellt werden,
- dass in einem zweiten Anzeigebetriebszustand zweite fahrzeugbezogene Informationen und ein zweites, das Kraftfahrzeug repräsentierendes Grafikobjekt dargestellt werden, und
- dass durch eine Bedienaktion ein Umschalten zwischen erstem und zweitem Anzeigebetriebszustand bewirkt wird, **dadurch gekennzeichnet, dass** das erste Kraftfahrzeug repräsentierende Grafikobjekt größer als das zweite ist, und dass die Bedienaktion eine Drehung eines Drehelementes um einen vorgegebenen Drehwinkel, insbesondere in eine vorgegebene Drehrichtung, umfasst.

4. Kraftfahrzeug
- mit einer Vielzahl von elektronischen Erfassungseinrichtungen zum Erfassen und Bereitstellen von fahrzeugbezogenen Informationen, wobei sich die fahrzeugbezogenen Informationen auf verschiedene Bereiche oder Komponenten außerhalb oder innerhalb des Kraftfahrzeuges beziehen,
- mit einer Anzeigeeinrichtung (ANZ) zur Anzeige von fahrzeugbezogenen Informationen,
- mit einer Bedieneinrichtung (BE) zur Erfassung einer Bedienaktion und
- mit einer Steuereinrichtung (STE) die derart eingerichtet und mit den Erfassungseinrichtungen, der Anzeigeeinrichtung (ANZ) und der Bedieneinrichtung (BE) gekoppelt ist,
- dass in einem ersten Anzeigebetriebszustand erste fahrzeugbezogene Informationen und ein erstes, das Kraftfahrzeug repräsentierendes Grafikobjekt dargestellt werden,
- dass in einem zweiten Anzeigebetriebszustand zweite fahrzeugbezogene Informationen und ein zweites, das Kraftfahrzeug repräsentierendes Grafikobjekt dargestellt werden, und
- dass durch eine Bedienaktion ein Umschalten zwischen erstem und zweitem Anzeigebetriebszustand bewirkt wird, **dadurch gekennzeichnet, dass** das erste das Kraftfahrzeug repräsentierende Grafikobjekt größer als das zweite ist, und dass die Erfassungseinrichtung ein Betriebsstoffkontrollsystem zum Bereitstellen von Informationen über den Füllstand von Betriebsstoffbehältern oder ein Verschleißgradkontrollsystem zum Bereitstellen von Informationen über den Verschleißgrad von Fahrzeugkomponenten umfasst.

5. Kraftfahrzeug nach einem der vorhergehenden Ansprüche,
bei dem sich die zweiten fahrzeugbezogenen Informationen auf einen Bereich oder eine Komponente außerhalb oder innerhalb des Kraftfahrzeuges beziehen, die eine größere Entfernung zum Zentrum des Kraftfahrzeuges aufweisen als der Bereich oder die Komponente, auf welche sich die ersten fahrzeugbezogenen Informationen beziehen.

6. Kraftfahrzeug nach einem der vorhergehenden Ansprüche,
bei dem im zweiten Anzeigebetriebszustand durch die Bedienaktion in einen Zoom-Betriebszustand umgeschaltet wird, in dem durch die Anzeigeeinrichtung eine Straßenkartendarstellung angezeigt wird, und in dem durch eine weitere Bedienaktion der Darstellungsmaßstab der Straßenkartendarstellung geändert wird.

7. Kraftfahrzeug nach einem der vorhergehenden Ansprüche,
bei dem das erste und das zweite das Kraftfahrzeug repräsentierende Grafikobjekt hinsichtlich der Gestalt und/oder des Umrisses und/oder der Darstellungsposition auf der Anzeigeeinrichtung im Wesentlichen identisch sind.

## Claims

1. A motor vehicle having
- a plurality of electronic detection devices for detecting and providing vehicle-related information, wherein the vehicle-related information relates to different areas or components outside or inside the motor vehicle,
- a display device (ANZ) for displaying vehicle-related information,
- an operating device (BE) for detecting an operating action, and
- a control device (STE) which is configured and coupled to the detection devices, the display device (ANZ) and the operating device (BE) such that
- in a first display operating state, first vehicle-related information and a first graphics object, representing the motor vehicle, are displayed,
- in a second display operating state, second vehicle-related information and a second graphics object, representing the motor vehicle, are displayed, and
- an operating action causes a change-over between the first and the second display operating states, **characterised in that** the first graphics object representing the motor vehicle is larger than the second, and **in that** the operating action changes the display scale of a road map view in a further operating state.

2. A motor vehicle having
- a plurality of electronic detection devices for detecting and providing vehicle-related information, wherein the vehicle-related information relates to different areas or components outside or inside the motor vehicle,
- a display device (ANZ) for displaying vehicle-related information,
- an operating device (BE) for detecting an operating action, and
- a control device (STE) which is configured and coupled to the detection devices, the display device (ANZ) and the operating device (BE) such that
- in a first display operating state, first vehicle-related information and a first graphics object, representing the motor vehicle, are displayed,
- in a second display operating state, second vehicle-related information and a second graphics object, representing the motor vehicle, are displayed,
- an operating action causes a change-over between the first and the second display operating states, and
- wherein the areas or components to which the displayed vehicle-related information relates are displayed on the display device in that corresponding component graphics objects or area graphics objects are marked on the display device, wherein the position of the component graphics objects or of the area graphics objects relative to the graphics object representing the motor vehicle corresponds to the position of the components or areas relative to the centre of the motor vehicle, **characterised in that** the first graphics object representing the motor vehicle is larger than the second.

3. A motor vehicle having
- a plurality of electronic detection devices for detecting and providing vehicle-related information, wherein the vehicle-related information relates to different areas or components outside or inside the motor vehicle,
- a display device (ANZ) for displaying vehicle-related information,
- an operating device (BE) for detecting an operating action, and
- a control device (STE) which is configured and coupled to the detection devices, the display device (ANZ) and the operating device (BE) such that
- in a first display operating state, first vehicle-related information and a first graphics object, representing the motor vehicle, are displayed,
- in a second display operating state, second vehicle-related information and a second graphics object, representing the motor vehicle, are displayed, and
- an operating action causes a change-over between the first and the second display operating states, **characterised in that** the first graphics object representing the motor vehicle, is larger than the second, and **in that** the operating action comprises a rotation of a rotational element about a predetermined rotational angle, more especially in a predetermined direction of rotation.

4. A motor vehicle having
- a plurality of electronic detection devices for detecting and providing vehicle-related information, wherein the vehicle-related information relates to different areas or components outside or inside the motor vehicle,
- a display device (ANZ) for displaying vehicle-related information,
- an operating device (BE) for detecting an operating action, and
- a control device (STE) which is configured and coupled to the detection devices, the display device (ANZ) and the operating device (BE) such that
- in a first display operating state, first vehicle-related information and a first graphics object, representing the motor vehicle, are displayed,
- in a second display operating state, second vehicle-related information and a second graphics object, representing the motor vehicle, are displayed, and
- an operating action causes a change-over between the first and the second display operating states, **characterised in that** the first graphics object representing the motor vehicle is larger than the second, and **in that** the detection device comprises a fuel control system for providing information about the filling level of fuel containers or comprises a degree of wear control system for providing information about the degree of wear of vehicle components.

5. A motor vehicle according to any of the preceding claims, wherein the second vehicle -related information relates to an area or a component outside or inside the motor vehicle which are at a greater distance from the centre of the motor vehicle than the area or component to which the first vehicle-related information relates.

6. A motor vehicle according to any of the preceding claims, wherein in the second display operating state, the operating action switches over into a zoom operating state in which the display device displays a road map view, and in which the display scale of the road map view is changed by a further operating action..

7. A motor vehicle according to any of the preceding claims, wherein the first and the second graphics objects representing the motor vehicle are substantially identical in respect of the form and/or the outline and/or the display position on the display device.

## Revendications

1. Véhicule comprenant :
- un ensemble de dispositifs de détection électroniques permettant de détecter et de fournir des informations relatives au véhicule, ces informations relatives au véhicule concernant différentes zones ou composants externes ou internes du véhicule,
- un dispositif d'affichage (ANZ) permettant d'afficher des informations relatives au véhicule,
- un dispositif de manoeuvre (BE) permettant de détecter une action de manoeuvre, et
- un dispositif de commande (STE) réalisé et couplé aux dispositifs de détection, au dispositif d'affichage (ANZ) et au dispositif de manoeuvre (BE) de sorte que :
- dans un premier état de fonctionnement d'affichage, des premières informations relatives au véhicule et un premier objet graphique représentant le véhicule soient représentés,
- dans un second état de fonctionnement d'affichage, des secondes informations relatives au véhicule et un second objet graphique représentant le véhicule soient représentés, et
- une action de manoeuvre provoque une commutation entre le premier état de fonctionnement d'affichage et le second état de fonctionnement d'affichage,
**caractérisé en ce que**
le premier objet graphique représentant le véhicule est plus grand que le second objet graphique représentant le véhicule, et par l'action de manoeuvre, dans un autre état de fonctionnement l'échelle de représentation d'une carte routière est modifiée.

2. Véhicule comprenant :
- un ensemble de dispositifs de détection électroniques permettant de détecter et de fournir des informations relatives au véhicule, ces informations relatives au véhicule concernant différentes zones ou composants externes ou internes du véhicule,
- un dispositif d'affichage (ANZ) permettant d'afficher des informations relatives au véhicule,
- un dispositif de manoeuvre (BE) permettant de détecter une action de manoeuvre, et
- un dispositif de commande (STE) réalisé et couplé aux dispositifs de détection, au dispositif d'affichage (ANZ) et au dispositif de manoeuvre (BE) de sorte que :
- dans un premier état de fonctionnement d'affichage, des premières informations relatives au véhicule et un premier objet graphique représentant le véhicule soient représentés,
- dans un second état de fonctionnement d'affichage, des secondes informations relatives au véhicule et un second objet graphique représentant le véhicule soient représentés,
- une action de manoeuvre provoque une commutation entre le premier état de fonctionnement d'affichage et le second état de fonctionnement d'affichage, et
- les zones ou composants auxquels se rapportent les informations relatives au véhicule représentées sont affichées sur le dispositif d'affichage de sorte que des objets graphiques de composants correspondants ou des objets graphiques de zones correspondants soient repérés sur le dispositif d'affichage, la position des objets graphiques de composants ou des objets graphiques de zones par rapport à l'objet graphique représentant le véhicule, correspondant à la position des composants ou des zones par rapport au centre du véhicule,
**caractérisé en ce que**
le premier objet graphique représentant le véhicule est plus grand que
le second objet graphique représentant le véhicule.

3. Véhicule comprenant :
- un ensemble de dispositifs de détection électroniques permettant de détecter et de fournir des informations relatives au véhicule, ces informations relatives au véhicule concernant différentes zones ou composants externes ou internes du véhicule,
- un dispositif d'affichage (ANZ) permettant d'afficher des informations relatives au véhicule,
- un dispositif de manoeuvre (BE) permettant de détecter une action de manoeuvre, et
- un dispositif de commande (STE) réalisé et couplé aux dispositifs de détection, au dispositif d'affichage (ANZ) et au dispositif de manoeuvre (BE) de sorte que :
- dans un premier état de fonctionnement d'affichage, des premières informations relatives au véhicule et un premier objet graphique représentant le véhicule soient représentés,
- dans un second état de fonctionnement d'affichage, des secondes informations relatives au véhicule et un second objet graphique représentant le véhicule soient représentés, et
- une action de manoeuvre provoque une commutation entre le premier et le second état de fonctionnement d'affichage,
**caractérisé en ce que**
le premier objet graphique représentant le véhicule et plus grand que le second objet graphique représentant le véhicule, et
l'action de manoeuvre comprend une rotation d'un élément rotatif d'un angle de rotation prédéfini, en particulier, dans un sens de rotation prédéfini.

4. Véhicule comprenant :
- un ensemble de dispositifs de détection électroniques permettant de détecter et de fournir des informations relatives au véhicule, ces informations relatives au véhicule concernant différentes zones ou composants externes ou internes du véhicule,
- un dispositif d'affichage (ANZ) permettant d'afficher des informations relatives au véhicule,
- un dispositif de manoeuvre (BE) permettant de détecter une action de manoeuvre, et
- un dispositif de commande (STE) réalisé et couplé aux dispositifs de détection, au dispositif d'affichage (ANZ) et au dispositif de manoeuvre (BE) de sorte que :
- dans un premier état de fonctionnement d'affichage, des premières informations relatives au véhicule et un premier objet graphique représentant le véhicule soient représentés,
- dans un second état de fonctionnement d'affichage, des secondes informations relatives au véhicule et un second objet graphique représentant le véhicule soient représentés, et
- une action de manoeuvre provoque une commutation entre le premier état de fonctionnement d'affichage et le second état de fonctionnement d'affichage,
**caractérisé en ce que**
le premier objet graphique représentant le véhicule est plus grand que
le second objet graphique représentant le véhicule et
le dispositif de détection comprend un système de contrôle de carburant permettant de fournir des informations concernant le niveau de réservoirs de carburant ou un système de contrôle de degré d'usure permettant de fournir des informations concernant le degré d'usure de composants du véhicule.

5. Véhicule, conforme à l'une des revendications précédentes,
dans lequel
les secondes informations relatives au véhicule concernent une zone ou un composant externe ou interne du véhicule plus éloigné du centre du véhicule que la zone où le composant à laquelle ou auquel se rapportent les premières informations relatives au véhicule.

6. Véhicule, conforme à l'une des revendications précédentes,
dans lequel
dans le second état de fonctionnement d'affichage on effectue par l'action de manoeuvre une commutation dans un état de fonctionnement de zoom dans lequel une représentation de cartes routières est affichée par le dispositif d'affichage, et dans lequel, par une action de manoeuvre ultérieure, l'échelle de représentation de la représentation de la carte routière est modifiée.

7. Véhicule conforme à l'une des revendications précédentes,
dans lequel
le premier objet graphique et le second objet graphique représentant le véhicule sont essentiellement identiques concernant leur configuration et/ ou leur contour et/ ou leur position de représentation sur le dispositif d'affichage.
